# FASCICULE DE BREVET EUROPEEN

(11) **EP 3 008 927 B1**
(45) Date de publication et mention de la délivrance du brevet: **31.07.2019**
(21) Numéro de dépôt: 14736875.7
(22) Date de dépôt: 10.06.2014
(51) Int. Cl.: H04W 80/04, H04W 4/50, H04L 29/08, H04W 88/06

(54) **PROCEDE DE GESTION DE LA MOBILITE D'UN NOEUD**
VERFAHREN ZUR VERWALTUNG DER MOBILITÄT EINES KNOTENS
METHOD FOR MANAGING THE MOBILITY OF A NODE

(30) Priorité: 10.06.2013 FR 1355340
(43) Date de publication de la demande: 20.04.2016
(73) Titulaire: AIRBUS DS SAS, 78990 Elancourt (FR)
(72) Inventeur: PATEROUR, Olivier, F-78280 Guyancourt (FR)
(74) Mandataire: Cabinet Camus Lebkiri
(86) Numéro de dépôt international: PCT/FR2014/000127
(87) Numéro de publication internationale: WO 2014/199026

(56) Documents cités:
- US-A1- 2011 029 607
- US-B2- 8 020 157
- "Standardized Connectivity Management Objects ; OMA-DDS-DM_ConnMO-V1_0-20081107-A", OMA-DDS-DM_CONNMO-V1_0-20081107-A, OPEN MOBILE ALLIANCE (OMA), 4330 LA JOLLA VILLAGE DR., SUITE 110 SAN DIEGO, CA 92122 ; USA , no. 1.0 7 novembre 2008 (2008-11-07), pages 1-40, XP064067249, Extrait de l'Internet: URL:ftp/Public_documents/DM/ConnMO/Permane nt_documents [extrait le 2008-11-21]

## Description

### DOMAINE TECHNIQUE ET OBJET DE L'INVENTION

L'invention se rapporte au domaine des télécommunications et plus particulièrement à la gestion de la mobilité d'un noeud à travers une pluralité de réseaux de télécommunications. A cette fin, l'invention concerne un procédé et un système de gestion de la mobilité d'un noeud dans une pluralité de réseaux de télécommunications ainsi qu'un tel noeud mobile.

### ETAT DE LA TECHNIQUE

Lors de ses déplacements, un noeud mobile se connecte de manière connue à différents réseaux de télécommunications en utilisant le Protocole Internet (Internet Protocol ou IP en langue anglaise) afin de maintenir une ou plusieurs sessions de communications à travers un ou plusieurs de ces réseaux.

A titre d'exemple, ces différents types de réseaux supportant le Protocole Internet, appelés par la suite « réseaux IP », peuvent être des réseaux du type Wireless Local Area Network (WLAN), Third Génération Partnership Project Packet Switched (3GPP PS), Code Division Multiple Access (CDMA), Long-Term Evolution (4G-LTE) ou Long-Term Evolution Advanced (4G-LTE Advanced).

De manière classique, pour chaque type de réseau IP, un noeud mobile est associé à au moins un réseau IP dit « d'attache » ou « de base » (« Home » en langue anglaise) mais peut se déplacer hors de ce réseau IP de base vers un réseau IP dit « externe » ou « étranger » (« Foreign » en langue anglaise) du même type que le réseau IP de base. Par exemple, un noeud mobile peut être associé à un réseau IP 3GPP PS de base et peut se déplacer et se connecter à un ou plusieurs autres réseaux IP 3GPP PS externes.

Afin de gérer la mobilité des noeuds mobiles entre deux réseaux, tels que par exemple un réseau IP de base et un réseau IP externe ou bien deux réseaux IP de base de types différents, il est connu d'utiliser un serveur de gestion de la mobilité appelé agent d'attache (Home Agent ou HA en langue anglaise) connecté à au moins un réseau IP de base et configuré pour communiquer avec les noeuds mobiles en utilisant un protocole de communication appelé « Protocole Internet Mobile » ou « Mobile IP » (MIP) en langue anglaise tel que, par exemple, MIPv4 ou MIPv6.

« Mobile IP » est un protocole standard de communications de l'IETF (Internet Engineering Task Force) qui a été conçu pour permettre aux utilisateurs de se déplacer depuis leur réseau IP de base vers un réseau IP externe tout en maintenant les communications actives et la même adresse IP. L'implémentation de la mobilité IP pour IPv4 est décrite dans la RFC 5944, avec des extensions décrites dans la RFC 4721. L'implémentation de la mobilité IP pour IPv6 est définie dans la RFC 6275.

Afin de maintenir une communication lorsqu'il se déplace d'un réseau à un autre, un noeud mobile communique de manière connue avec son agent d'attache à travers une session dite « de mobilité » en utilisant le protocole de mobilité IP (MIP). A cet effet, le noeud mobile stocke dans une zone mémoire un ensemble de données, appelées par la suite « données de mobilité », qu'il peut utiliser, par exemple, pour se connecter à l'agent d'attache ou bien pour permettre son authentification afin de se connecter à un réseau.

Chaque type de réseau IP peut utiliser son propre agent d'attache ou bien un même agent d'attache dit « commun » pour gérer la mobilité IP des noeuds mobiles. Par exemple, un réseau de type WLAN et un réseau de type 3GPP PS peuvent utiliser un premier agent d'attache commun et un réseau de type CDMA peut utiliser un deuxième agent d'attache différent du premier agent d'attache.

De manière classique, le noeud mobile comprend autant de modules de gestion de la mobilité IP que de types de réseaux auxquels il peut se connecter, chacun des modules comportant un ensemble de données de mobilité correspondant à un agent d'attache prédéterminé. Ainsi, dans l'exemple précité, lorsque le noeud mobile est connecté à son réseau 3GPP PS de base, il communique avec le premier agent d'attache commun via un premier module de gestion associé audit réseau 3GPP PS de base, puis lorsqu'il s'est déplacé dans son réseau WLAN de base, il communique avec le premier agent d'attache commun via un deuxième module de gestion associé audit réseau WLAN de base.

Dans une solution connue du type Open Mobile Architecture (OMA) dans laquelle les données sont organisées sous forme d'arborescence, il est connu de définir une arborescence de données pour chaque type de réseau de télécommunications. Ainsi, lorsque plusieurs réseaux de types différents utilisent un agent d'attache commun, les arborescences de données de mobilité sont dupliquées pour chacun des modules de gestion associés. Dans ce cas, tout ajout, modification ou suppression de données de mobilité doit être réalisé dans chacun des modules de gestion, ce qui augmente à la fois le risque d'erreur de saisie et la maintenance à effectuer sur le noeud mobile et présente donc un inconvénient important.

On connait par ailleurs dans l'état de la technique le document US 2011/029607.

### PRESENTATION GENERALE DE L'INVENTION

La présente invention a pour but de remédier à ces inconvénients en proposant une solution simple, ouverte et efficace de gestion de la mobilité d'un noeud mobile à travers une pluralité de réseaux de télécommunications.

A cet effet, l'invention a tout d'abord pour objet un procédé de gestion de la mobilité d'un noeud mobile dans une pluralité de réseaux de télécommunications, ladite pluralité de réseaux de télécommunications comprenant au moins un premier réseau de télécommunications et un deuxième réseau de télécommunications, ledit noeud mobile comprenant :- une zone mémoire, dans laquelle est stocké un ensemble de données de mobilité du noeud mobile dans la pluralité de réseaux,
- un premier module de gestion de la mobilité dudit noeud mobile configuré pour établir à travers le premier réseau, à partir d'au moins une donnée de mobilité, une session de mobilité avec un agent d'attache, et,
- un deuxième module de gestion de la mobilité dudit noeud mobile, configuré pour établir à travers le deuxième réseau, à partir d'au moins une donnée de mobilité, une session de mobilité avec ledit agent d'attache,
le procédé étant remarquable en ce que, le premier module étant configuré pour accéder à l'ensemble de données de mobilité stocké dans la zone mémoire, il comprend une étape d'obtention, par le deuxième module, auprès du premier module, d'au moins une donnée de mobilité de l'ensemble de données accessible par le premier module.

Ainsi, les données de mobilité du noeud mobile sont avantageusement stockées à un seul endroit, accessible par le premier module, de sorte que tout ajout, modification ou suppression de données de mobilité est uniquement réalisé dans une unique zone mémoire et n'a pas besoin d'être dupliquée dans une deuxième zone mémoire accessible par le deuxième module. Le temps et le coût de maintenance sont donc avantageusement réduits de même que le nombre d'erreurs de saisie des données de mobilité puisque celles-ci ne sont saisies que dans une seule zone mémoire.

Par les termes « données de mobilité », on entend les données nécessaires à un noeud mobile pour se connecter, lors d'une session de mobilité avec un agent d'attache basée sur un protocole de mobilité IP (MIP), à un deuxième réseau de télécommunication lors d'une mobilité depuis un premier réseau de télécommunications. Les données de mobilité peuvent comprendre des données d'authentification d'un utilisateur du noeud mobile auprès d'un serveur d'authentification (par exemple, un serveur Authentication Authorization Accounting ou AAA) telles que par exemple un clé partagée, des données servant à établir une session de mobilité entre le noeud mobile et l'agent d'attache comprenant, par exemple, une clé partagée, l'adresse IP de l'agent d'attache, un index de paramètres de sécurité, des données permettant de configurer des options du protocole d'échange MIP entre le noeud mobile et l'agent d'attache (timer, nombre de répétitions etc).

Avec le procédé selon l'invention, lorsque le deuxième module a besoin d'une donnée de mobilité, telle que, par exemple, une clé de cryptage permettant de s'authentifier pour établir une communication à travers l'un des réseaux, il l'obtient du premier module, qui a accès à la zone mémoire dans laquelle la clé est stockée, puis conduit une session de mobilité avec l'agent d'attache en utilisant ladite clé de cryptage ainsi obtenue afin de réaliser son authentification.

De préférence, la donnée de mobilité étant identifiée par une adresse, le deuxième module obtient ladite donnée à partir de ladite adresse.

De manière avantageuse, l'adresse de la donnée de mobilité étant stockée dans une deuxième zone mémoire du noeud mobile accessible par le deuxième module, le procédé comprend une étape préliminaire d'obtention de ladite adresse.

Selon une caractéristique de l'invention, le procédé comprend une étape d'utilisation de la donnée de mobilité obtenue afin de permettre, via l'agent d'attache, l'établissement d'au moins une communication avec un deuxième noeud mobile à travers le deuxième réseau de télécommunications.

Selon un aspect de l'invention, cette étape d'utilisation comprend une étape d'authentification du noeud mobile réalisée par l'intermédiaire de l'agent d'attache lors de la session de mobilité du noeud mobile.

L'invention concerne aussi un noeud mobile configuré pour accéder à une pluralité de réseaux de télécommunications, ladite pluralité de réseaux de télécommunications comprenant au moins un premier réseau de télécommunications et un deuxième réseau de télécommunications, ledit noeud mobile comprenant :
- une zone mémoire, dans laquelle est stocké un ensemble de données de mobilité du noeud mobile dans la pluralité de réseaux,
- un premier module de gestion de la mobilité dudit noeud mobile configuré pour établir à travers le premier réseau, à partir d'au moins une donnée de mobilité, une session de mobilité avec un agent d'attache, et,
- un deuxième module de gestion de la mobilité dudit noeud mobile configuré pour établir à travers le deuxième réseau, à partir d'au moins une donnée de mobilité, une session de mobilité avec ledit agent d'attache,
le noeud mobile étant remarquable en ce que le premier module est configuré pour accéder à l'ensemble de données de mobilité stocké dans la zone mémoire et en ce que le deuxième module comprend des moyens d'obtention, auprès du premier module, d'au moins une donnée de mobilité de l'ensemble de données accessible par le premier module.

De préférence, la donnée de mobilité étant identifiée dans la zone mémoire par une adresse, les moyens d'obtention sont configurés pour obtenir la donnée à partir de ladite adresse.

Avantageusement, l'adresse de la donnée de mobilité se présente sous la forme d'un identifiant uniforme de ressource (Uniform Resource Identifier). Une telle adresse se présente sous la forme d'une chaine de caractères et permet donc d'obtenir aisément la donnée de mobilité.

Selon une caractéristique de l'invention, l'ensemble de données de mobilité est organisé sous forme d'une arborescence, de préférence du type Open Mobile Architecture (OMA). Une telle organisation permet d'identifier aisément et rapidement la donnée afin de l'obtenir.

L'utilisation d'un tel protocole, ouvert, permet, depuis un serveur OMA de gestion de noeuds mobiles accessible à travers les différents réseaux, de gérer de manière uniforme les données de mobilité de l'ensemble des noeuds mobiles supportant ce protocole OMA quel que soit le type de réseau auquel ils sont attachés et quelles que soient leurs spécificités. Un noeud mobile peut ainsi avantageusement se connecter à tout type de réseau dont les données de mobilité sont organisées selon le modèle OMA.

Selon une autre caractéristique de l'invention, la pluralité de réseaux comprenant un troisième réseau de télécommunications, le noeud mobile comprend un troisième module de gestion de la mobilité configuré pour établir à travers ledit troisième réseau, à partir d'au moins une donnée de mobilité, une session de mobilité avec un deuxième agent d'attache. Le noeud mobile peut ainsi avantageusement communiquer, par exemple simultanément, avec deux agents d'attaches différents à travers respectivement deux réseaux différents.

Avantageusement, la pluralité de réseaux comprenant un quatrième réseau de télécommunications, le noeud mobile comprend un quatrième module de gestion de la mobilité configuré pour établir à travers ledit quatrième réseau, à partir d'au moins une donnée de mobilité, une session de mobilité avec le deuxième agent d'attache. Le noeud mobile peut ainsi gérer deux sessions de mobilité en parallèle permettant la mobilité du noeud mobile simultanément entre, d'une part, le premier réseau et le deuxième réseau, et, d'autre part, le troisième réseau et le quatrième réseau.

Le noeud mobile peut être un terminal mobile ou un serveur mobile.

Dans une forme de réalisation, le noeud mobile est un serveur mobile comprenant au moins un, de préférence une pluralité de modules de connexion d'au moins un terminal audit serveur mobile afin d'établir, via le serveur mobile, une ou plusieurs sessions de communication à travers au moins l'un des réseaux de télécommunications.

L'invention concerne aussi un système de télécommunications remarquable en ce qu'il comprend :
- une pluralité de réseaux de télécommunications comprenant au moins un premier réseau de télécommunications et un deuxième réseau de télécommunications,
- un agent d'attache, et,
- un noeud mobile tel que présenté précédemment.

De préférence, les réseaux de la pluralité de réseaux de télécommunications sont des réseaux supportant le Protocole Internet (IP).

Selon un aspect de l'invention, le premier réseau de télécommunications et le deuxième réseau de télécommunications sont des réseaux de base de types différents. Par les termes « réseaux de base », on entend des réseaux de base pour le noeud mobile.

Selon un aspect de l'invention, la pluralité de réseaux comprend un troisième réseau de télécommunications, le système comprend un deuxième agent d'attache et le noeud mobile comprend un troisième module de gestion de la mobilité configuré pour établir à travers ledit troisième réseau, à partir d'au moins une donnée de mobilité, une session de mobilité avec ledit deuxième agent d'attache.

De manière avantageuse, la pluralité de réseaux de télécommunications comprend un quatrième réseau de télécommunications et le noeud mobile comprend un quatrième module de gestion de la mobilité configuré pour établir à travers ledit quatrième réseau, à partir d'au moins une donnée de mobilité, une session de mobilité avec le deuxième agent d'attache. Le noeud mobile peut ainsi gérer deux sessions de mobilité en parallèle permettant la mobilité du noeud mobile simultanément entre, d'une part, le premier réseau et le deuxième réseau, et, d'autre part, le troisième réseau et le quatrième réseau.

Par exemple, le premier réseau peut être un réseau de base 3GPP PS, le deuxième réseau peut être un réseau de base WLAN, le troisième réseau peut être un réseau de base CDMA et le quatrième réseau peut être un réseau du type Tetra, Tetrapol, P25 ou autre.

De préférence, le noeud mobile est un serveur mobile et le système comprend au moins un terminal, de préférence une pluralité de terminaux connectés audit serveur mobile afin d'établir, via le serveur mobile, une ou plusieurs communications à travers au moins l'un des réseaux de télécommunications.

D'autres caractéristiques et avantages de l'invention apparaîtront lors de la description qui suit faite en regard des figures annexées données à titre d'exemples non limitatifs et dans lesquelles des références identiques sont données à des objets semblables.

### DESCRIPTION DES FIGURES

La figure 1 illustre schématiquement une forme de réalisation d'un système de télécommunications selon l'invention.
La figure 2 illustre schématiquement une forme de réalisation d'un noeud mobile selon l'invention.
La figure 3 illustre un mode de réalisation du procédé selon l'invention.

### DESCRIPTION DETAILLEE DE L'INVENTION

L'invention trouve son application dans la gestion de la mobilité d'un noeud mobile à travers une pluralité de réseaux de télécommunications.

Un tel noeud mobile peut être un terminal mobile ou un serveur mobile auquel une pluralité de terminaux peuvent se connecter.

L'invention est décrite ci-après en référence à une pluralité de réseaux IP de télécommunications mais peut bien entendu trouver une application dans la gestion de la mobilité d'un noeud mobile à travers tous types de réseaux de télécommunications.

### Système

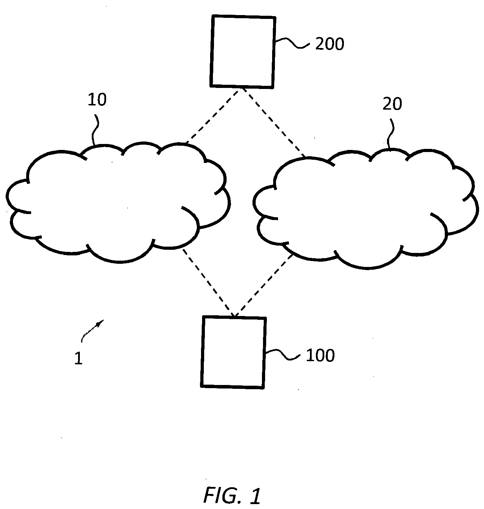

La forme de réalisation du système de télécommunications 1 selon l'invention illustrée à la figure 1 comprend un premier réseau IP de télécommunications 10, un deuxième réseau IP de télécommunications 20, un noeud mobile 100 et un agent d'attache 200.

Dans cet exemple, le premier réseau 10 est un réseau IP de base 3GPP PS du noeud mobile 100 et le deuxième réseau 20 est un réseau IP de base WLAN du noeud mobile 100.

### Noeud mobile

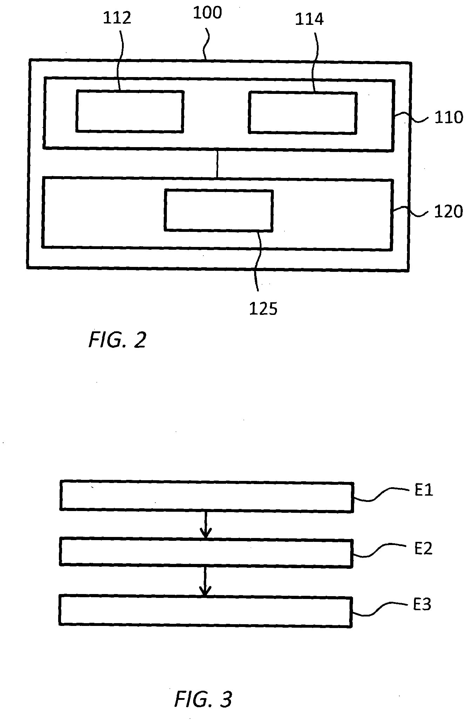

Comme illustré à la figure 2, le noeud mobile 100 comprend un premier module 110 de gestion de la mobilité du noeud mobile 100 et un deuxième module 120 de gestion de la mobilité du noeud mobile 100.

Le premier module 110 est configuré pour communiquer avec l'agent d'attache 200 en utilisant le protocole Mobile IPv4 (MIPv4) et/ou IPv6 (MIPv6) lors d'une session de mobilité. Une telle session de mobilité permet notamment d'établir une session de communication à travers le deuxième réseau 20, suite à une mobilité du premier réseau 10 vers le deuxième réseau 20, pour continuer une communication préalablement initiée à travers le premier réseau 10.

Dans cet exemple, toujours en référence à la figure 2, le premier module 110 de gestion de la mobilité comprend un premier sous-module 112 de gestion MIPv4, un deuxième sous-module 114 de gestion MIPv6.

Le premier sous-module 112 de gestion IPv4 comprend des données de mobilité IPv4. De même, le deuxième sous-module 114 de gestion IPv6 comprend des données de mobilité IPv6.

Les données de mobilité peuvent comprendre des données d'authentification d'un utilisateur du noeud mobile auprès d'un serveur d'authentification (par exemple, un serveur Authentication Authorization Accounting ou AAA) telles que par exemple un clé partagée, des données servant à établir une session de mobilité entre le noeud mobile et l'agent d'attache comprenant, par exemple, une clé partagée, l'adresse IP de l'agent d'attache, un index de paramètres de sécurité, des données permettant de configurer des options du protocole d'échange MIP entre le noeud mobile et l'agent d'attache (timer, nombre de répétitions etc).

Le deuxième module 120 de gestion de la mobilité du noeud mobile 100 est configuré pour communiquer avec l'agent d'attache 200 en utilisant le protocole Mobile IPv4 (MIPv4) et/ou IPv6 (MIPv6) lors d'une session de mobilité permettant notamment d'établir une session de communication à travers le deuxième réseau 20, suite à une mobilité du premier réseau 10 vers le deuxième réseau 20, pour continuer une communication préalablement initiée à travers le premier réseau 10.

L'ensemble des données de mobilité du noeud mobile 100 est stocké dans une zone mémoire (non représentée) du noeud mobile 100 accessible par le premier module 110.

Selon l'invention, le deuxième module 120 de gestion de la mobilité comprend des moyens d'obtention 125 configurés pour obtenir auprès du premier module 110, au moins une donnée de mobilité de l'ensemble de données accessible par le premier module 110.

Dans cet exemple, le deuxième module 120 est en outre configuré pour obtenir préalablement l'adresse de la données de mobilité à utiliser lors d'une session de mobilité avec l'agent d'attache 200.

Avantageusement, l'adresse de la donnée de mobilité se présente sous la forme d'un identifiant uniforme de ressource (Uniform Resource Identifier). Un tel identifiant se présente sous la forme d'une chaine de caractères qui permet d'obtenir aisément la donnée de mobilité.

Dans cet exemple, l'ensemble des données de mobilité du noeud mobile 100 est organisé sous forme d'une arborescence de type OMA.

### Organisation des données selon l'arborescence OMA

L'arborescence OMA définit de manière connue un objet appelé Managed Object (MO) IP auquel quatre noeuds de données sont rattachés : les noeuds IPv4, IPv6 pour la gestion des protocoles respectivement IPv4 et IPv6 et les noeuds MIPv4 et MIPv6 pour la gestion de mobilité respectivement MIPv4 et MIPv6.

Selon l'invention, un nouveau noeud de données appelé MIPRef est ajouté à l'objet MO IP avec les propriétés OMA suivantes :
- Access Type : Get, Replace
- Occurrence : ZéroOrOne
- Format : chr
- Value : non renseigné ou URI vers le MO qui possède la définition par ex : "./ManagedObjects/ConnMo/Modulel/IP".

Le noeud de données MIPRef permet d'accéder à la fois à l'ensemble de la définition MIPv4 et MIPv6.

Si le noeud de données MIPRef n'existe pas, ou existe mais le champ « value » n'est pas renseigné, ou existe mais le champ « value » est incorrect (pointe vers un module qui n'existe pas, ou vers un module qui existe mais ne comportant pas de définition MPIv4 ou MIPv6), alors la définition MIP correspondant au module associé doit être définie explicitement dans MIPv4 et MIPv6 pour que la fonctionnalité puisque être mise en oeuvre.

Si le noeud de données MIPRef est renseigné pour le module N, et pointe bien vers un module P comportant une définition MIPv4 et MIPv6 valide, alors les MO MIPv4 et MIPv6 du module N sont sans objet.

On voit bien toute la souplesse de la définition permettant de répondre à toute évolution ou convergence du côté des réseaux d'accès de manière très simple en renseignant ou non le noeud de données MIPRef.

### Illustration d'un mode de réalisation du procédé selon l'invention

Dans cet exemple, le noeud mobile 100 a établi au préalable une session de communication à travers le premier réseau IP de télécommunications 10.

Lorsqu'il se déplace du premier réseau 10 dans le deuxième réseau 20, le noeud mobile 100 établit une session de mobilité avec l'agent d'attache 200 afin d'établir une nouvelle session de communication à travers le deuxième réseau 20 permettant de maintenir la session de communication préalablement établie à travers le premier réseau 10.

A cette fin, le deuxième module 120 utilise une ou plusieurs données de mobilité stockées dans la zone mémoire accessible par le premier module 110.

Selon l'invention, les moyens d'obtention 125 obtiennent, dans une première étape E1, la ou les adresses respectivement de la ou des données de mobilité à utiliser lors de la session de mobilité. Les adresses peuvent être stockées avantageusement dans une deuxième zone mémoire (non représentée) accessible par le deuxième module 120, par exemple comprise dans le deuxième module 120.

Puis, dans une étape E2, les moyens d'obtention 125 obtiennent, auprès du premier module 110 qui a accès à la zone mémoire de stockage de l'ensemble de données de mobilité, ladite ou lesdites données de mobilité en utilisant ladite ou lesdites adresses obtenues.

Enfin, dans une étape E3, le deuxième module 120 utilise la ou les données de mobilité obtenues, par exemple en les envoyant à l'agent d'attache 200, afin de permettre, via l'agent d'attache 200, l'établissement d'une session de communication à travers le deuxième réseau de télécommunications 20 permettant de poursuivre de manière transparente la communication préalablement établie sur le premier réseau 10.

L'invention permet donc avantageusement de gérer les données de mobilité d'un noeud mobile de manière efficace et aisée en les stockant dans une unique zone mémoire.

## Revendications

1. Procédé de gestion de la mobilité d'un noeud mobile (100) dans une pluralité de réseaux de télécommunications (10, 20), ladite pluralité de réseaux de télécommunications (10, 20) comprenant au moins un premier réseau de télécommunications (10) et un deuxième réseau de télécommunications (20), ledit noeud mobile (100) comprenant :
- une zone mémoire, dans laquelle est stocké un ensemble de données de mobilité du noeud mobile (100) dans la pluralité de réseaux (10, 20),
- un premier module (110) de gestion de la mobilité dudit noeud mobile (100) configuré pour établir à travers le premier réseau (10), à partir d'au moins une donnée de mobilité, une session de mobilité avec un agent d'attache (200), et,
- un deuxième module (120) de gestion de la mobilité dudit noeud mobile (100), configuré pour établir à travers le deuxième réseau (20), à partir d'au moins une donnée de mobilité, une session de mobilité avec ledit agent d'attache (200),
le premier module (110) étant configuré pour accéder à l'ensemble de données de mobilité stocké dans la zone mémoire, le procédé comprenant une étape d'obtention (E2), par le deuxième module (120), auprès du premier module (110), d'au moins une donnée de mobilité de l'ensemble de données accessible par le premier module (110).

2. Procédé selon la revendication 1, dans lequel, la donnée de mobilité étant identifiée par une adresse, le deuxième module (120) obtient ladite donnée à partir de ladite adresse.

3. Procédé selon la revendication précédente, l'adresse de la donnée de mobilité étant stockée dans une deuxième zone mémoire du noeud mobile (100) accessible par le deuxième module (120), le procédé comprend une étape préliminaire (E1) d'obtention de ladite adresse.

4. Procédé selon l'une des revendications précédentes, ledit procédé comprenant une étape d'utilisation (E3) de la donnée de mobilité obtenue afin de permettre, via l'agent d'attache (200), l'établissement d'au moins une communication à travers le deuxième réseau de télécommunications (20).

5. Procédé selon l'une des revendications précédentes, dans lequel l'ensemble de données de mobilité est organisé sous forme d'une arborescence du type Open mobile Architecture.

6. Noeud mobile configuré pour accéder à une pluralité de réseaux de télécommunications (10, 20), ladite pluralité de réseaux de télécommunications (10, 20) comprenant au moins un premier réseau de télécommunications (10) et un deuxième réseau de télécommunications (20), ledit noeud mobile (100) comprenant :
- une zone mémoire, dans laquelle est stocké un ensemble de données de mobilité du noeud mobile (100) dans la pluralité de réseaux (10, 20),
- un premier module (110) de gestion de la mobilité dudit noeud mobile (100) configuré pour établir à travers le premier réseau (10), à partir d'au moins une donnée de mobilité, une session de mobilité avec un agent d'attache (200), et,
- un deuxième module (120) de gestion de la mobilité dudit noeud mobile (100) configuré pour établir à travers le deuxième réseau, à partir d'au moins une donnée de mobilité, une session de mobilité avec ledit agent d'attache (200),
le premier module (110) étant configuré pour accéder à l'ensemble de données de mobilité stocké dans la zone mémoire et le deuxième module (120) comprenant des moyens d'obtention (125), auprès du premier module (110), d'au moins une donnée de mobilité de l'ensemble de données accessible par le premier module (110).

7. Noeud mobile selon la revendication précédente, dans lequel, la donnée de mobilité étant identifiée dans la zone mémoire par une adresse, les moyens d'obtention (125) sont configurés pour obtenir la donnée à partir de ladite adresse.

8. Noeud mobile selon la revendication précédente, dans lequel l'adresse de la donnée de mobilité se présente sous la forme d'un identifiant uniforme de ressource.

9. Noeud mobile selon l'une des revendications précédentes 6 à 8, dans lequel les données sont organisées sous forme d'une arborescence du type Open Mobile Architecture.

10. Noeud mobile selon l'une des revendications précédentes 6 à 9, dans lequel la pluralité de réseaux (10, 20) comprenant un troisième réseau de télécommunications et un quatrième réseau de télécommunications, le serveur mobile (100) comprend un troisième module de gestion de la mobilité, configuré pour établir à travers ledit troisième réseau, à partir d'au moins une donnée de mobilité, une session de mobilité avec un deuxième agent d'attache, et un quatrième module de gestion de la mobilité, configuré pour établir à travers ledit quatrième réseau, à partir d'au moins une donnée de mobilité, une session de mobilité avec ledit deuxième agent d'attache.

11. Noeud mobile selon l'une des revendications précédentes 6 à 10, ledit noeud mobile étant un serveur mobile comprenant au moins un, de préférence une pluralité de modules de connexion d'au moins un terminal audit serveur mobile afin d'établir, via le serveur mobile, une ou plusieurs sessions de communication à travers au moins l'un des réseaux de télécommunications.

12. Système de télécommunications comprenant;
- une pluralité de réseaux de télécommunications (10, 20) comprenant au moins un premier réseau de télécommunications (10) et un deuxième réseau de télécommunications (20),
- un agent d'attache (200), et,
- un noeud mobile (100) selon l'une des revendications 6 à 11, ledit noeud mobile (100) comprenant :
- une zone mémoire, dans laquelle est stocké un ensemble de données de mobilité du noeud mobile (100) dans la pluralité de réseaux (10, 20),
- un premier module (110) de gestion de la mobilité dudit noeud mobile (100) configuré pour établir à travers le premier réseau (10), à partir d'au moins une donnée de mobilité, une session de mobilité avec l'agent d'attache (200), et,
- un deuxième module (120) de gestion de la mobilité dudit noeud mobile (100) configuré pour établir à travers le deuxième réseau, à partir d'au moins une donnée de mobilité, une session de mobilité avec ledit agent d'attache (200), le premier module (110) étant configuré pour accéder à l'ensemble de données de mobilité stocké dans la zone mémoire, le deuxième module (120) comprenant des moyens d'obtention (125), auprès du premier module (110), d'au moins une donnée de mobilité de l'ensemble de données accessible par le premier module (110).

## Patentansprüche

1. Verwaltungsverfahren der Mobilität eines mobilen Knotens (100) in einer Vielzahl von Telekommunikationsnetzen (10, 20), wobei die genannte Vielzahl von Telekommunikationsnetzen (10, 20) wenigstens ein erstes Telekommunikationsnetz (10) und ein zweites Telekommunikationsnetz (20) umfasst, wobei der genannte mobile Knoten (100) umfasst:
- einen Speicherbereich, in dem eine Gruppe von Mobilitätsangaben des mobilen Knotens (100) in der Vielzahl von Netzen (10, 20) gespeichert ist;
- ein erstes Verwaltungsmodul (110) der Mobilität des genannten mobilen Knotens (100), das zum Aufbauen einer Mobilitäts-Session mit einem Verbindungsposten (200) über das erste Netz (10) ausgehend von wenigstens einer Mobilitätsangabe konfiguriert ist, und
- ein zweites Verwaltungsmodul (120) der Mobilität des genannten mobilen Knotens (100), das zum Aufbauen einer Mobilitäts-Session mit dem genannten Verbindungsposten (200) über das zweite Netz (20) ausgehend von wenigstens einer Mobilitätsangabe konfiguriert ist, wobei das erste Modul (100) konfiguriert ist, um auf die Gruppe von Mobilitätsangaben zuzugreifen, die in dem Speicherbereich gespeichert ist, wobei das Verfahren umfasst
einen Einholungsschritt (E2) wenigstens einer Mobilitätsangabe der Gruppe von Angaben, die durch das erste Modul (110) zugänglich ist, durch das zweite Modul (120) bei dem ersten Modul (110).

2. Verfahren gemäß Anspruch 1, bei dem die Mobilitätsangabe durch eine Adresse identifiziert ist, wobei das zweite Modul (120) die genannte Angabe ausgehend von der genannten Adresse erhält.

3. Verfahren gemäß dem voranstehenden Anspruch, wobei die Adresse der Mobilitätsangabe, die in einem zweiten Speicherbereich des mobilen Knotens (100) gespeichert ist, durch das zweite Modul (120) zugänglich ist, das Verfahren einen einleitenden Einholungsschritt (E1) der genannten Adresse umfasst.

4. Verfahren gemäß einem der voranstehenden Ansprüche, wobei das genannte Verfahren einen Verwendungsschritt (E3) der erhaltenen Mobilitätsangabe umfasst, um über den Verbindungsposten (200) den Aufbau wenigstens einer Kommunikation über das zweite Telekommunikationsnetz (20) zu erlauben.

5. Verfahren gemäß einem der voranstehenden Ansprüche, bei dem die Gruppe von Mobilitätsangaben in Form einer Baumstruktur vom Typ Offene Mobile Architektur organisiert ist.

6. Mobiler Knoten, der für den Zugriff auf eine Vielzahl von Telekommunikationsnetzen (10, 20) konfiguriert ist, wobei die genannte Vielzahl von Telekommunikationsnetzen (10, 20) wenigstens ein erstes Telekommunikationsnetz (10) und ein zweites Telekommunikationsnetz (20) umfasst, wobei der genannte mobile Knoten (100) umfasst:
- einen Speicherbereich, in dem eine Gruppe von Mobilitätsangaben des mobilen Knotens (100) in der Vielzahl von Netzen (10, 20) gespeichert ist,
- ein erstes Verwaltungsmodul (110) der Mobilität des genannten mobilen Knotens (100), das zum Aufbauen einer Mobilitäts-Session mit einem Verbindungsposten (200) über das erste Netz (10) ausgehend von wenigstens einer Mobilitätsangabe konfiguriert ist, und
- ein zweites Verwaltungsmodul (120) der Mobilität des genannten mobilen Knotens (100), das zum Aufbauen einer Mobilitäts-Session mit dem genannten Verbindungsagenten (200) über das zweite Netz ausgehend von wenigstens einer Mobilitätsangabe konfiguriert ist, wobei das erste Modul (110) konfiguriert ist, um auf die Gruppe von Mobilitätsangaben zuzugreifen, die in dem Speicherbereich gespeichert ist, und das zweite Modul (120) bei dem ersten Modul (120) Einholungsmittel (125) wenigstens einer Mobilitätsangabe der Gruppe von Angaben, die durch das erste Modul (110) zugänglich ist, umfasst.

7. Mobiler Knoten gemäß dem voranstehenden Anspruch, in dem die Mobilitätsangabe in dem Speicherbereich durch eine Adresse identifiziert ist, die Einholungsmittel (125) für die Einholung der Angabe ausgehend von der genannten Adresse konfiguriert ist.

8. Mobiler Knoten gemäß dem voranstehenden Anspruch, bei dem die Adresse der Mobilitätsangabe sich in Form einer einheitlichen Ressourcenkennung darstellt.

9. Mobiler Knoten gemäß einem der voranstehenden Ansprüche 6 bis 8, bei dem die Angaben in Form einer Baumstruktur vom Typ Offene Mobile Architektur organisiert sind.

10. Mobiler Knoten gemäß einem der voranstehenden Ansprüche 6 bis 9, bei dem die Vielzahl von Netzen (10, 20) ein drittes Telekommunikationsnetz und ein viertes Telekommunikationsnetz, wobei der mobile Server (100) ein drittes Verwaltungsmodul der Mobilität umfasst, das zum Aufbauen einer Mobilitäts-Session mit einem zweiten Verbindungsposten über das genannte dritte Netz ausgehend von wenigstens einer Mobilitätsangabe konfiguriert ist, und ein viertes Verwaltungsmodul der Mobilität, das zum Aufbauen einer Mobilitäts-Session mit dem genannten zweiten Verbindungsposten über das genannte vierte Netz ausgehend von wenigstens einer Mobilitätsangabe konfiguriert ist, umfasst.

11. Mobiler Knoten gemäß einem der voranstehenden Ansprüche 6 bis 10, wobei der genannte mobile Knoten ein mobiler Server ist, der wenigstens ein, bevorzugt eine Vielzahl von Verbindungsmodulen wenigstens eines Terminals an dem genannten mobilen Server umfasst, um über den mobilen Server eine oder mehrere Kommunikations-Sessions über wenigstens eines der Telekommunikationsnetze aufzubauen.

12. Telekommunikationssystem, umfassend:
- eine Vielzahl von Telekommunikationsnetzen (10, 20), umfassend wenigstens ein erstes Telekommunikationsnetz (10) und ein zweites Telekommunikationsnetz (20),
- einen Verbindungsposten (200) und
- einen mobilen Knoten (100) gemäß einem der Ansprüche 6 bis 11, wobei der genannte mobile Knoten (100) umfasst:
- einen Speicherbereich, in dem eine Gruppe von Mobilitätsangaben des mobilen Knotens (100) in der Vielzahl von Netzen (10, 20) gespeichert ist,
- ein erstes Verwaltungsmodul (110) der Mobilität des genannten mobilen Knotens (100), das zum Aufbauen einer Mobilitäts-Session mit dem Verbindungsposten (200) über das erste Netz (10) ausgehend von wenigstens einer Mobilitätsangabe konfiguriert ist, und
- ein zweites Verwaltungsmodul (120) der Mobilität des genannten mobilen Knotens (100), das zum Aufbauen einer Mobilitäts-Session mit dem genannten Verbindungsposten (200) über das zweite Netz ausgehend von wenigstens einer Mobilitätsangabe konfiguriert ist, wobei das erste Modul (110) zum Zugriff auf die Gruppe von Mobilitätsangaben konfiguriert ist, die im Speicherbereich gespeichert ist, wobei das zweite Modul (120) Einholungsmittel (125) wenigstens einer Mobilitätsangabe der von dem ersten Modul (110) zugänglichen Angaben bei dem ersten Modul (110) umfasst.

## Claims

1. A method for managing the mobility of a mobile node (100) in a plurality of telecommunications networks (10, 20), said plurality of telecommunications networks (10, 20) comprising at least a first telecommunications network (10) and a second telecommunications network (20), said mobile node (100) comprising:
- a memory zone, in which is stored a set of mobility data of the mobile node (100) in the plurality of networks (10, 20),
- a first module (110) for managing the mobility of said mobile node (100) configured to establish through the first network (10), from at least one mobility datum, a mobility session with a home agent (200), and
- a second module (120) for managing the mobility of said mobile node (100) configured to establish through the second network (20), from at least one mobility datum, a mobility session with said home agent (200),
the first module (110) being configured to access the set of mobility data stored in the memory zone, the method comprising a step of obtaining (E2), by the second module (120), from the first module (110), at least one mobility datum of the set of data accessible by the first module (110).

2. The method according to claim 1, wherein, the mobility datum being identified by an address, the second module (120) obtains said datum from said address.

3. The method according to the preceding claim, the address of the mobility datum being stored in a second memory zone of the mobile node (100) accessible by the second module (120), the method comprises a preliminary step (E1) of obtaining said address.

4. The method according to one of the preceding claims, said method comprising a step of using (E3) the mobility datum obtained in order to enable, via the home agent (200), at least one communication to be established through the second telecommunications network (20).

5. The method according to one of the preceding claims, wherein the set of mobility data is organised as an open mobile architecture type tree structure.

6. A mobile node configured to access a plurality of telecommunications networks (10, 20), said plurality of telecommunications networks (10, 20) comprising at least a first telecommunications network (10) and a second telecommunications network (20), said mobile node (100) comprising:
- a memory zone, in which is stored a set of mobility data of the mobile node (100) in the plurality of networks (10, 20) is stored,
- a first module (110) for managing the mobility of said mobile node (100) configured to establish through the first network (10), from at least one mobility datum, a mobility session with a home agent (200), and
- a second module (120) for managing the mobility of said mobile node (100) configured to establish through the second network, from at least one mobility datum, a mobility session with said home agent (200),
the first module (110) being configured to access the set of mobility data stored in the memory zone and the second module (120) comprising means for obtaining (125), from the first module (110), at least one mobility datum of the set of data accessible by the first module (110).

7. The mobile node according to the preceding claim, wherein, the mobility datum being identified in the memory zone by an address, the obtaining means (125) are configured to obtain the datum from said address.

8. The mobile node according to the preceding claim, wherein the address of the mobility datum is in the form of a resource uniform identifier.

9. The mobile node according to one of the preceding claims 6 to 8, wherein the data are organised as an open mobile architecture type tree structure.

10. The mobile node according to one of the preceding claims 6 to 9, wherein the plurality of networks (10, 20) comprising a third telecommunications network and a fourth telecommunications network, the mobile server (100) comprises a third mobility management module, configured to establish through said third network, from at least one mobility datum, a mobility session with a second home agent, and a fourth mobility management module, configured to establish through said fourth network, from at least one mobility datum, a mobility session with said second home agent.

11. The mobile node according to one of the preceding claims 6 to 10, said mobile node being a mobile server comprising at least one, preferably a plurality of modules for connecting at least one terminal to said mobile server in order to establish, via the mobile server, one or more communication sessions through at least one of the telecommunications networks.

12. A telecommunications system comprising:
- a plurality of telecommunications networks (10, 20) comprising at least a first telecommunications network (10) and a second telecommunications network (20),
- a home agent (200), and
- a mobile node (100) according to one of claims 6 to 11, said mobile node (100) comprising:
∘ a memory zone, in which is stored a set of mobility data of the mobile node (100) in the plurality of networks (10, 20),
∘ a first module (110) for managing the mobility of said mobile node (100) configured to establish through the first network (10), from at least one mobility datum, a mobility session with the home agent (200), and
∘ a second module (120) for managing the mobility of said mobile node (100) configured to establish through the second network, from at least one mobility datum, a mobility session with said home agent (200), the first module (110) being configured to access the set of mobility data stored in the memory zone, the second module (120) comprising means for obtaining (125), from the first module (110), at least one mobility datum of the set of data accessible by the first module (110).
